**Europäisches Patentamt**

(19) **European Patent Office**

**Office européen des brevets**

(11) Veröffentlichungsnummer: **0 125 463**
**B1**

(12) **EUROPÄISCHE PATENTSCHRIFT**

(45) Veröffentlichungstag der Patentschrift:
25.11.87

(51) Int. Cl.⁴: **B 01 J 47/04**, B 01 J 49/00

(21) Anmeldenummer: **84103779.9**

(22) Anmeldetag: **05.04.84**

(54) **Verfahren zur internen Regeneration von Ionenaustauscherharzen in Mischbettfiltern und Mischbettfilter zur Durchführung des Verfahrens.**

(30) Priorität: **14.04.83 DE 3313471**

(43) Veröffentlichungstag der Anmeldung:
**21.11.84 Patentblatt 84/47**

(45) Bekanntmachung des Hinweises auf die Patenterteilung:
**25.11.87 Patentblatt 87/48**

(84) Benannte Vertragsstaaten:
**AT BE CH DE FR GB IT LI NL SE**

(56) Entgegenhaltungen:
DE-A-2 631 414
GB-A-1 498 139
JP-A-80 028 729

CHEMICAL ABSTRACTS, Band 93, Nr. 12,
September 1980, Seite 334, Nr. 120221q, Columbus,
Ohio, US; & JP-A-80 28 729 (NIPPON RENSUI,
INC.) 29-02-1980
PATENTS ABSTRACTS OF JAPAN, Band 5, Nr. 94 (C-
59) 766 , 19. Juni 1981; & JP-A-56 38 136
(MITSUBISHI KASEI KOGYO K.K.) 13-04-1981
PATENTS ABSTRACTS OF JAPAN, Band 4, Nr. 101
(C-19) 583 , 19. Juli 1980, Seite 124 C 19; & JP-A-55
847 (MITSUBISHI JUKOGYO K.K.) 15-05-1980

(73) Patentinhaber: **BAYER AG, Konzernverwaltung RP
Patentabteilung, D-5090 Leverkusen 1 Bayerwerk
(DE)**

(72) Erfinder: **Martinola, Friedrich, Dr., Leopold-
Gmelin- Strasse 16, D-5000 Köln 80 (DE)**

64

## Beschreibung

Die Erfindung betrifft ein neues Verfahren zur internen Regenerierung von erschöpften Kationen- und Anionenaustauscherharzen in Mischbettfiltern und ein Mischbettfilter zur Durchführung des Verfahrens.

Mischbettfilter sind Ionenaustauscher-Filter, die mit Kationenaustauschern und Anionenaustauschern gefüllt sind. Während des Beladungsvorganges liegen Kationen- und Anionenaustauscher in Form einer innigen Mischung vor. Zum Regenerieren der beladenen Austauscher wird das Mischbett hydraulisch aufgrund der unterschiedlichen spezifischen Gewichte von Kationen- und Anionenaustauscher in diese beiden Komponenten aufgetrennt, und zwar in eine untere Schicht aus den spezifisch schwereren Kationenaustauschern und einer oberen Schicht aus den spezifisch leichteren Anionenaustauschern. Im Anschluß an die Auftrennung werden Kationen- und Anionenaustauscher getrennt regeneriert und ausgewaschen.

Mischbettfilter sind bekannt und werden, da mit ihnen eine wirksame Entsalzung erreichbar ist, aus in der Praxis vielfach angewendet. Mischbettfilter haben jedoch den schwerwiegenden Nachteil, daß die Regeneration der erschöpften Ionenaustauscher erhebliche Schwierigkeiten bereitet, weil die Klassierung des Mischbettes in Kationen- und Anionenaustauscher nur unvollständig möglich ist. Die unvollständige Auftrennung in Kationen- und Anionenaustauscher hat zur Folge, daß beim Regenerieren des Kationenaustauschers die in ihm befindlichen Anionenstauscherteilchen durch das für den Kationenaustauscher bestimmte Regeneriermittel und beim Regenerieren des Anionenaustauschers die in ihm befindlichen Kationenaustauscherteilchen durch das für den Anionenaustauscher bestimmte Regeneriermittel beladen werden.

Zu der durch unvollständige Auftrennung verursachten Fehlbeladung von Kationen- und Anionenaustauschern kommt bei Mischbettfiltern mit interner Regenerierung die unvermeidbare Fehlbeladung der in der Nähe der Grenzschicht Kationenaustauscher/Anionenaustauscher befindlichen Ionenaustauscherkomponente durch Eindringen des Regeneriermittels für die eine Komponente in die Schicht der anderen Komponente.

Die Fehlbeladung fürt im Beladungsschritt zu einer Herabsetzung der Qualität der behandelten Flüssigkeit; außerdem ist die Fehlbeladung eine Ursache dafür, daß mit Mischbetten nur unverhältnismäßig niedrige nutzbare Kapazitäten erreicht werden.

Zur Vermeidung der Folgen der Fehlbeladung durch Eindringen des Regeneriermittels für die eine Komponente in die Schicht der anderen Komponente wird in der JP-A-8 028 729 (referiert in C.A. 93 (1980) Nr. 120 221 q) vorgeschlagen, nach dem Regenerieren der beiden Mischbett-Komponenten, die an der Grenzfläche der beiden Komponenten befindliche Zwischenschicht aus dem Filter zu entfernen und dem erschöpften Mischbett erst zur Regeneration wider zuzusetzen. Die Entnahme der Zwischenschicht aus dem Filter erfolgt mit einer üblichen, horizontal in der Ionenaustauschermasse ligenden Transportleitung. Diese Entnahme über eine horizontale Transportleitung führt jedoch zu einer Verwirbelung der Zwischenschicht und der angrenzenden Schichten. Ausweislich der in JA-A-8 028 729 für das verfahrensgemäß behandelte Wasser angegebenen Werte (Restleitfähigkeit und Restgehalte an Na-Ionen) wird durch das vorgeschlagene Entfernen der Zwischenschicht keine Verbesserung gegenüber den üblichen Verfahren zum Betreiben von Mischbettfiltern mit interner Regeneration erreicht. Die nach dem Entfernen der Zwischenschicht erhaltenen Restleitfähigkeiten und Gehalte an Na-Ionen werden auch mit üblicherweise regenerierten Mischbetten, d.h. ohne Entfernen der Zwischenschicht erhalten.

Zur Vermeidung der Fehlbeladung durch Eindringen des Regeneriermittels für die eine Komponente in die Schicht der anderen Komponente und der durch sie verursachten Minderung der Qualität der behandelten Flüssigkeiten und Herabsetzung der nutzbaren Kapazität hat man ferner vorgeschlagen, die Regenerierung nicht intern, d.h. im Mischbettfilter selbst, sondern extern, d.h. in getrennten Gefäßen außerhalb des Mischbettfilters, vorzunehmen. Bei dieser externen Regenerierung wird die Austauschermasse hydraulisch aus dem Mischbettfilter in eine Trennkolonne gefördert. In dieser werden die beiden Komponenten durch Rückspülen getrennt. Nachdem die eine der Komponenten in ein drittes Gefäß überführt worden ist, wird jede der beiden Komponenten für sich regeneriert und ausgewaschen. Anschließend werden beide Komponenten wieder zurück ins Mischbettfilter gefördert und dort für den nächsten Beladungsvorgang gemischt.

Durch die externe Regeneration wird zwar das Eindringen des Regeneriermittels für die eine Komponente in die Schicht der anderen Komponente und die durch dieses Eindringen verursachte Fehlbeladung vermieden, nicht vermieden wird jedoch die Fehlbeladung der Ionenaustauscher infolge unvollständiger Trennung in Kationen- und Anionenaustauscher und die Folgen dieser Fehlbeladung (niedrige nutzbare Kapazität, unbefriedigende Qualität der behandelten Flüssigkeit). Die Verunreinigung der jeweiligen Ionenaustauscherkomponente durch Teilchen der Gegenkomponente ist naturgemäß in der Nähe der Grenzfläche Kationenaustauscher/Anionenaustauscher am stärksten. Man hat deshalb, um die durch unvollständige Trennung verursachte Fehlbeladung und deren Folgen zu vermindern vorgeschlagen (s. z. B. DE-AS-26 31 414; GB-PS-14 98 139), die nach der externen Auftrennung des Mischbettes in Kationen- und Anionenaustauscher zwischen beiden Komponenten verbleibende Mischharzzone, nach dem Ablassen der einen Komponente, z.B. des Kationenaustauschers, ebenfalls abzutrennen, sie nicht am Regenerierprozeß zu beteiligen, sondern in einem getrennten Behälter aufzubewahren und sie erst wieder dem verbrauchten Mischbett des nächsten Arbeitszyklus vor der Auftrennung in Kationen- und Anionenaustauscher zuzusetzen.

Mit Hilfe dieser speziellen Verfahren zur externen Regeneration von Ionenaustauschern in Mischbettfiltern wird eine Fehlbeladung weitgehend vermieden und infolgedessen eine wesentliche Verbesserung der nutzbaren Kapazität und der Qualität der behandelten Flüssigkeit erreicht, verglichen mit der nutzbaren Kapazität und der Qualität der behandelten Flüssigkeit, die mit Mischbettfiltern mit interner Regeneration erhalten werden. Trotzdem haben diese speziellen Verfahren, z. B. das in der DB-AS-26 31 414 beschriebene Verfahren, nur eine sehr beschränkte Anwendung gefunden, weil nämlich die Verfahren und die zu ihrer Durchführung erforderlichen Vorrichtungen viel zu aufwendig sind.

Als andere Maßnahme zur Verbesserung der nutzbaren Kapazität von Mischbettfiltern mit interner Regenerierung und der Qualität der mit ihnen behandelten Flüssigkeiten wurde vorgeschlagen, der Ionenaustauschermasse ein nicht am Ionenaustausch teilnehmendes Harz beizufügen, das sich bei der Klassierung zwischen den Anionenaustauscher und den Kationenaustauscher legt (s. z. B. DE-PS-971 771; US-PS-26 66 741). Durch diese Trennschichtharze soll eine unmittelbare Berührung von Kationenaustauscher und Anionenaustauscher vermieden werden. Legt man die Ableitung der Regeneriermittelströme in diese Zwischenschicht aus Inertharz, so wird zwar die Gefahr des Eindringens der einzelnen Regeneriermittellösungen in die Gegenkomponente vermindert. Nicht verbessern läßt sich jedoch durch die Mitverwendung der Trennschichtharze die unvollständige Klassierung und die durch sie verursachte Fehlbeladung. Die Einführung einer dritten, inerten Komponente bringt vielmehr noch den Nachteil, daß die Ionenaustauschermasse durch ihren Volumenanteil (etwa 20 %) verdünnt und damit die nutzbare Volumenkapazität des Mischbettfilters weiter herabgesetzt wird. Außerdem sind die Trenngrenzen für Kationenaustauscher/Trennharz und Anionenaustauscher/Trennharz weniger scharf ausgebildet als die Grenze zwischen den beiden Ionenaustauschern im Zweikomponentensystem, weil die Differenz im spezifischen Gewicht zwischen Inertharz und dem jeweiligen Ionenaustauscher nur halb so groß ist wie die Differenz zwischen den beiden Ionenaustauschern. Eine Änderung des spezifischen Gewichts auch nur einer der drei Komponenten, wie sie im praktischen Betrieb häufig vorkommt, oder eine Änderung der Teilchengröße, z. B. durch Abrieb, führen deshalb umgehend zu einer ungenügenden Trennung von Ionenaustauscher und Inertharz. Diese bewirkt aber, daß sich das Volumen der einen Austauscherkomponente um das Volumen des inerten Harzes vergrößert und daß sich auf diese Weise die Trenngrenze gegen die andere Austauscherkomponente über oder unter die ursprünglich inmitten der Trennharzschicht angebrachte Mitteldrainage verlagert. Damit entsteht aber eine noch ungünstigere Situation, als sie bereits in den einfachen Mischbettfiltern vorliegt. Zu weiteren Komplikationen führt weiterhin die Eigenschaft der Trennharze, daß sie zum Aufschwimmen neigen, wenn Luft in das Mischbett geblasen wird. Durch dieses Aufschwimmen geht die beabsichtigte Wirkung der Trennharze als Zwischenschicht verloren.

Das heißt, auch mit Hilfe von Trennschichtharzen läßt sich das technische Problem nicht lösen, in Mischbettfiltern mit interner Regeneration die beim Regenerieren auftretenden Schwierigkeiten zu beseitigen oder zumindest herabzusetzen und dadurch eine höhere nutzbare Kapazität und eine verbesserte Qualität der behandelten Flüssigkeit zu erreichen.

Es wurde nun gefunden, daß man das vorstehend aufgezeigte technische Problem in überraschend einfacher Weise dadurch lösen kann, wenn man in Mischbettfilter-Verfahren mit interner Regeneration, bei denen nach den Auftrennen der erschöpften Harzmasse in Kationen- und Anionenaustauscher und Regenerieren und Auswaschen der beiden Komponenten die im Bereich der Grenzfläche Kationenaustauscher/Anionenaustauscher befindliche Austauscherschicht aus dem Filter entfernt, der im Filter verbliebene Kationen-Filter entfernt, der im Filter verbliebene Kationenaustauscher mit dem im Filter verbliebenen Anionenaustauscher für den Beladungsschritt gemischt, der Beladungsschritt durchgeführt, dann die aus dem Filter entfernte Ionenaustauschermasse der erschöpften Ionenaustauschermasse vor oder während der Auftrennung in die Komponenten zugesetzt und nach erfolgter Auftrennung der Arbeitszyklus erneut mit der Regeneration von Kationen- und Anionenaustauscher begonnen wird, dafür sorgt, daß die Entnahme der im Bereich der Grenzfläche Kationenaustauscher/Anionenaustauscher befindlichen Austauscherschicht ohne Verwirbelung der angrenzenden Ionenaustauscherschichten erfolgt, und daß sich diese verwirbelungsfreie Entnahme hydraulisch in der Weise erreichen läßt, daß man senkrecht in die geschichtete Ionenaustauschermasse des recht in die geschichtete Ionenaustauschermasse des Mischbettfilters so viele Steigrohre einführt, wie erforderlich sind, daß der Abstand zwischen Steigrohr und Filterwand bzw., bei mehreren Steigrohren, zwischen Steigrohren und Filterwand und benachbarten Steigrohren in etwa gleichmäßig ist und bestimmte Werte nicht überschreitet und das (bzw. die) Steigrohr(e) so tief in die Ionenaustauschermasse einführt, daß sich das (bzw. die) in der Ionenaustauschermasse befindliche(n) Steigrohrende(n) bei Förderung durch Wasserdruck von oben in der unteren Begrenzungsfläche, bzw. bei Förderung durch Wasserdruck von unten in der oberen Begrenzungsfläche der aus dem Filter zu entfernenden Ionenaustauscherschicht befindet (befinden) und wenn man ferner den Abstand (a) Steigrohr (Rohrmitte)/Filterwand und die Dicke (D) der erfindungsgemäß aus dem Bereich der Mitteldrainage zu entfernenden Harzschicht in bestimmter Weise aufeinander abstimmt.

Überraschenderweise wurde festgestellt, daß bei der erfindungsgemäß vorgeschlagenen hydraulischen Förderung keine Verwirbelung der an die zu entfernende Ionenaustauscherschicht angrenzenden Ionenaustauscherschichten eintritt.

Bei Mischbettfiltern mit interner Regeneration befindet sich die Mitteldrainage zwangsläufig in oder in der unmittelbaren Umgebung der Grenzfläche Kationenaustauscher/Anionenaustauscher, da jede Verlagerung aus der Grenzfläche in eine der Komponenten zu einer verstärkten Fehlbeladung dieser Komponenten durch das Regeneriermittel für die Gegenkomponente führt. Daher ist bei Mischbettfiltern mit interner Regeneration die Angabe "im Bereich der Grenzfläche Kationenaustauscher/Anionenaustauscher" gleichbedeutend mit der Angabe "im Bereich der Mitteldrainage".

Die aus dem Filter entfernte Ionenaustauscherschicht besteht aus einem Gemisch aus Kationen- und Anionenaustauscher, das im wesentlichen den gesamten fehlbeladenen Kationen- und Anionenaustauscher enthält.

Durch das erfindungsgemäße verwirbelungsfreie Entfernen der im Bereich der Grenzfläche Kationenaustauscher/Anionenaustauscher· (= im Bereich der Mitteldrainage) befindlichen Ionenaustauscherschicht wird erreicht, daß am Beladungsschritt keine fehlbeladenen, sondern nur vollständig regenerierte Kationen- und Anionenaustauscher teilnehmen. Dadurch wird die nutzbare Kapazität des Mischbettfilters entscheidend erhöht und die Qualität der behandelten Flüssigkeit wesentlich verbessert. Die Erfindung betrifft daher ein Verfahren zur internen Regeneration von Mischbettfiltern durch Auftrennen der erschöpften Ionenaustauschermasse des Mischbettes in Kationen- und Anionenaustauscher mittels aufströmender Flüssigkeit, Regenerieren und Auswaschen der beiden Komponenten, Entfernen der im Bereich der Grenzfläche Kationenaustauscher/Anionenaustauscher befindlichen Austauscherschicht, Mischen des im Filter verbliebenen Kationenaustauschers mit dem im Filter verbliebenen Anionenaustauscher für den neuen Beladungsvorgang und - nach Beendigung des Beladungsvorganges-Zugabe der aus dem Filter entfernten Austauschermasse zur erschöpften Ionenaustauschermasse vor oder während der Auftrennung in Kationen- und Anionenaustauscher und Beginnen des nächsten Arbeitszyklus mit der Regeneration von Kationen- und Anionenaustauschern, das dadurch gekennzeichnet ist, daß man die Entnahme der im Bereich der Grenzfläche Kationenaustauscher/Anionenaustauscherschicht befindlichen Austauscherschicht verwirbelungsfrei mittels eines oder mehrerer senkrecht in die geschichtete Ionenaustauschermasse eingeführten Steigrohres (eingeführter Steigrohre) vornimmt, dessen (deren) in die Ionenaustauschermasse eintauchende(n) Öffnung(en) sich, je nachdem, ob die zur hydraulischen Förderung dienende Flüssigkeit dem Filter von oben oder von unten zugeführt wird, in der unteren oder in der oberen Grenzfläche der aus dem Filter zu fördernden Harzschicht befindet (befinden) und das (die) gleichmäßig so im Querschnitt des Filters angeordnet ist (sind), daß der Abstand (die Abstände) Steigrohr (Rohrmitte)/Filterwand den Wert 400 mm nicht überschreitet (überschreiten) und - bei mehreren Steigrohren - die gegebenenfalls unterschiedlichen Abstände der einzelnen Steigrohre voneinander den Wert 800 mm nicht überschreiten und das Verhältnis von Abstand (a) Steigrohr (Rohrmitte)/Filterwand zur Dicke D der aus dem Filter zu entfernenden Harzschicht höchstens 4 : 1, vorzugsweise 2 : 1 bis 1 : 1 beträgt.

Die erfindungsgemäß ·aus dem Mischbettfilter zu entfernende Ionenaustauscherschicht wird in ein gesondertes Vorratsgefäß überfuhrt. Von dort wird sie, gegebenenfalls nach Spülen zum Entfernen von Feinanteilen und/oder Zugabe von neuem Ionenaustauscher als Ersatz für Abrieb und/oder weiteren ähnlichen Sonderbehandlungen, dem im Mischbettfilter verbliebenen Ionenaustauscher vor oder während des Auftrennens wieder zugesetzt. ·

Die Dicke der erfindungsgemäß aus dem Bereich der Grenzfläche Kationenaustauscher/Anionenaustauscher (= Bereich der Mitteldrainage) zu entfernenden Harzschicht, hängt von der Schärfe der Trenngrenze Kationenaustauscher/Anionenaustauscher ab; je schärfer die Trenngrenze umso geringer kann die Dicke der zu entfernenden Harzschicht sein. Umgekehrt gilt, je verschwommener die Trenngrenze umso größer muß die Dicke der zu entfernenden Harzschicht sein.

Die Schärfe der Trenngrenze hängt außer vom Unterschied der spezifischen Gewichte von Kationen- und Anionenaustauscher vor allem von der Gleichmäßigkeit der Flüssigkeitsverteilung während der hydraulischen Auftrennung, der Regeneration und dem Auswaschen ab. Da man erfindungsgemäß mühelos auch dicke Harzschichten aus dem Bereich um die Mitteldrainage entfernen kann, ist das erfindungsgemäße Verfahren unabhängig davon, ob eine mehr oder weniger scharfe Trennung von Kationenaustauscher und Anionenaustauscher erreicht wird und damit auch unabhängig von der Flüssigkeitsverteilung im Filter und von Fehlleistungen des Betriebspersonals. Das erfindungsgemäße Verfahren liefert unabhängig von der Schärfe der Trenngrenze Kationenaustauscher/Anionenaustauscher stets gleichbleibend gute, reproduzierbare Ergebnisse, wenn man die Dicke (D) der aus dem Mischbettfilter zu entfernenden Harzschicht entsprechend groß wählt. Die im Einzelfall günstigste Dicke wird empirisch bestimmt.

Im allgemeinen hat sich bewährt, wenn die Dicke (D) (s. Fig. (1)) der zu entfernenden Harzschicht im Filter 100 bis 500 mm, d.h. je 50 bis 250 mm über und unter der Mitteldrainage, vorzugsweise 200 bis 400 mm, d.h. je 100 bis 200 mm über und unter der Mitteldrainage, beträgt.

Um im Steigrohr (9) bzw. den Steigrohren (9) technisch vernünftige Strömungsgeschwindigkeiten von etwa 0,1 bis 3 m/sec, vorzugsweise 0,4 bis 2 m/sec zu erreichen, sollte das Verhältnis freier Filterquerschnitt zu freiem Querschnitt des Steigrohrs, bzw. bei mehreren Steigrohren, zur Summe der freien Querschnitte der einzelnen Steigrohre etwa 300:1 bis 500:1 betragen.

Die hydraulische Förderung von Ionenaustauschern aus Ionenaustauscherfiltern, z. B. Mischbettfiltern, ist an sich bekannt. Bei dieser bekannten hydraulischen Förderung werden jedoch die Steigrohre bzw. das Steigrohr, bis auf den Boden des Filters geführt und die Ionenaustauschermasse als Ganzes ohne Rücksicht auf Verwirbelungen aus dem Filter gedrückt. Die erfindungsgemäße hydraulische Förderung unterscheidet sich von dieser bekannten hydraulischen Förderung dadurch, daß bei ihr selektiv eine bestimmte Zwischenschicht aus der Ionenaustauschermasse entfernt wird und dies, ohne daß es zu einer Verwirbelung der an diese Zwischenschicht angrenzenden Ionenaustauschermasse kommt.

Die Erfindung betrifft daher auch ein Mischbettfilter mit interner Regeneration zur Durchführung des beanspruchten Verfahrens. Dieses erfindungsgemäße Mischbettfilter ist dadurch gekennzeichnet, daß es aus einer für Mischbettfilter mit interner Regeneration üblichen Filterapparatur besteht, z. B. einem mit verschließbaren Flüssigkeitszu- und ableitungen versehenen Behälter, dessen zylindrischer Teil nach unten durch eine flüssigkeitsdurchlässige Vorrichtung abgeschlossen ist, auf der die aus Kationen- und Anionenaustauschermasse bestehende Ionenaustauschermasse ruht und in dem sich in Höhe der theoretischen Grenzfläche Kationenaustauscher/Anionenaustauscher eine Mitteldrainage befindet, die jedoch zum selektiven verwirbelungsfreien Entfernen der im Bereich der Grenzfläche Kationenaustauscher/Anionenaustauscher ( = im Bereich der Mitteldrainage) befindlichen Ionenaustauscherschicht zusätzlich mit einer Vorrichtung ausgerüstet ist, die aus einem oder mehreren senkrecht in die Ionenaustauschermasse eingeführten, mit einem Vorratsgefäß verbundenen Steigrohr(en) besteht, dessen (deren) in die Ionenaustauschermasse eintauchende(n) Öffnung(en) sich, je nachdem, ob die zur hydraulischen Förderung dienende Flüssigkeit dem Filter von oben oder von unten zugeführt wird, in der unteren oder in der oberen Grenzfläche der aus dem Filter zu fördernden Harzschicht befindet (befinden) und das (die) gleichmäßig so im Querschnitt des Filters angeordnet ist (sind), daß der Abstand (die Abstände) Steigrohr (Rohrmitte)/Filterwand den Wert 400 mm nicht überschreitet (überschreiten) und - bei mehreren Steigrohren - die gegebenenfalls unterschiedlichen Abstände der einzelnen Steigrohre voneinander den Wert 800 mm nicht überschreiten und bei denen der Abstand (a) Steigrohr (Rohrmitte)/Filterwand und Dicke (D) der erfindungsgemäß aus dem Bereich der Mitteldrainage zu entfernenden Harzschicht in der Weise aufeinander abgestimmt sind, daß das Verhältnis a : D höchstens 4 : 1, vorzugsweise 2 : 1 bis 1 : 1 beträgt.

Der Abstand (die Abstände) Steigrohr (Rohrmitte)/Filterwand beträgt (betragen) vorzugsweise 150 bis 300 mm; die gegebenenfalls unterschiedlichen Abstände Steigrohr (Rohrmitte)/Steigrohr (Rohrmitte) betragen vorzugsweise 300 bis 600 mm.

Der innere Durchmesser der Steigrohre beträgt vorteilhaft 10 bis 50 mm, vorzugsweise 10 bis 25 mm.

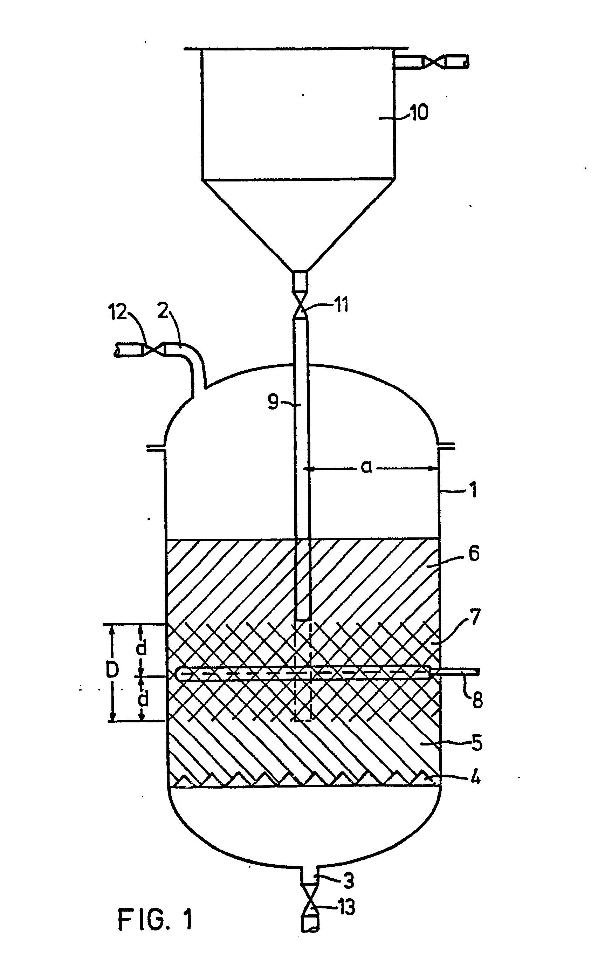

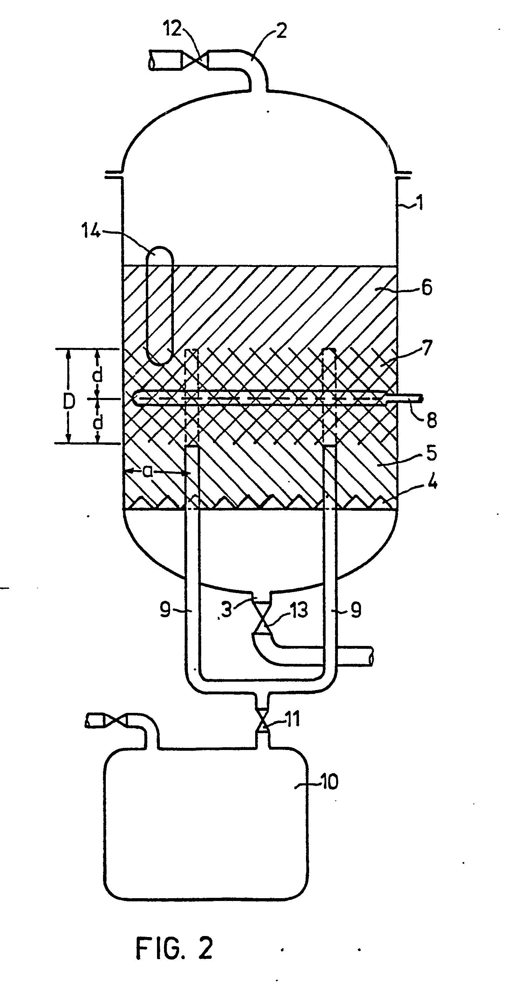

Eine bevorzugte Ausführungsform des erfindungsgemäßen Mischbettfilters ist in Fig. 1 und 2 schematisch dargestellt. In dieser Ausführungsform besteht das erfindungsgemäße Mischbettfilter aus einem mit verschließbaren Flüssigkeitszu- und -ableitungen (2) und (3) versehenen Behälter (1), dessen zylindrischer Teil nach unten durch eine flüssigkeitsdurchlässige Vorrichtung (4), z. B. einen Düsenboden, abgeschlossen ist, auf der die aus Kationenaustauscher (5) und Anionenaustauscher (6) bestehende Ionenaustauschermasse ruht; in dem sich in Höhe der theoretischen Grenzfläche Kationenaustauscher/Anionenaustauscher ( = Höhe der Kationenaustauscherfüllung) eine Mitteldrainage (8) befindet, und der mit einem (oder mehreren) senkrecht in die Ionenaustauschermasse eingeführten, mit einem Vorratsgefäß (10) verbundenen Steigrohr(en) (9) versehen ist, dessen (bzw. deren) in die Ionenaustauschermasse eintauchende(n) Öffnung(en) sich je nach dem, ob die zur hydraulischen Förderung dienende Flüssigkeit von oben, d.h. durch Leitung (2), oder von unten, d.h. durch Leitung (3), zugeführt wird, in der unteren oder in der oberen Grenzfläche der aus Behälter (1) zu fördernden Harzschicht (7) befindet (befinden) und in dem das (bzw. die) Steigrohr(e) (9) gleichmäßig so im Querschnitt des Behälters (1) angeordnet sind, daß der Abstand (bzw. die Abstände) (a) Steigrohr (Rohrmitte)/Behälterwand den Wert 400 mm nicht überschreitet und - bei mehreren Steigrohren (9) die gegebenenfalls unterschiedlichen Abstände der einzelnen Steigrohre (9) voneinander den Wert 800 mm nicht überschreiten.

Das erfindungsgemäße Verfahren und die Arbeitsweise des erfindungsgemäßen Mischbettfilters seien anhand des in Fig. 1 schematisch dargestellten erfindungsgemäßen Mischbettfilters erläutert:

Schritt A (Füllung des Filters und Regeneration der Ionenaustauscher): Im Behälter (1) wird der Raum zwischen unterem Düsenboden (4) und Mitteldrainage (8) mit Kationenaustauscher (5) gefüllt. Auf den Kationenaustauscher (5) wird der Anionenaustauscher (6) geschichtet. Anschließend wird jede der beiden Komponenten für sich regeneriert. Dabei können die Regeneriermittel für die beiden Komponenten in verschiedenen Richtungen durch die Komponenten geleitet werden: Im Gleichstrom von oben nach unten; in diesem Fall wird das Regeneriermittel für den Anionenaustauscher, d.h. die Regenerierbase, durch Leitung (2) zugeführt und durch die Mitteldrainage (8) abgezogen und das Regeneriermittel für den Kationenaustauscher (5), d.h. die Regeneriersäure, durch die Mitteldrainage (8) zugeführt und durch Leitung (3) abgezogen; oder im Gegenstrom; in diesem Fall wird die Regenerierbase durch Leitung (2) und die Regeneriersäure durch Leitung (3) zugeführt und die ablaufenden Regeneriermittel werden zusammen an der Mitteldrainage (8) abgezogen. Das Auswaschen der Ionenaustauscher nach der Regeneration erfolgt in gleicher Weise wie das Regenerieren.

Schritt B (Erfindungsgemäßes Entfernen der im Bereich der Mitteldrainage (8) befindlichen Harzschicht (7):

a) Bei hydraulischer Förderung der Harzschicht (7) durch Druck von oben auf die Ionenaustauschermasse; Zuleitung der die Förderung bewirkenden Flüssigkeit durch Leitung (2); bei dieser Förderweise befindet sich das in die Ionenaustauschermasse eintauchende Ende des Steigrohrs (9) in der unteren Begrenzungsfläche der aus dem Filter zu entfernenden Harzschicht (7). Nach beendetem Auswaschen der beiden Komponenten (5) und (6) wird bei geschlossenem Ventil (13) und geöffnetem Ventil (11) Flüssigkeit durch Leitung (2) in Behälter (1) gedrückt. Die Anionenaustauscherschicht (6) sinkt in gleichem Maße, wie die Harzschicht (7) durch das Steigrohr (9) in den Vorratsbehälter (10) befördert wird. Sobald die Harzschicht (7) verschwunden ist, wird der Flüssigkeitszulauf durch (2) durch Schließen des Ventils (12) beendet. Gleichzeitig wird auch Ventil (11) geschlossen.

b) Anstelle durch Druck von oben kann die Harzschicht (7) auch durch Druck von unten über Steigrohr (9) in das Vorratsgefäß (10) gefördert werden. Bei dieser Förderweise befindet sich das in die Ionenaustauschermasse eintauchende Ende des Steigrohrs (9) in der oberen Begrenzungsfläche der aus dem Filter zu entfernenden Harzschicht (7). In diesem Fall wird bei geschlossenem Ventil (12) und geöffnetem Ventil (11) solange Flüssigkeit durch Leitung (3) in den Behälter (7) gedrückt, bis sich die Harzschicht (1) im Vorratsgefäß (10) befindet.

Bevorzugt wird die Förderung gemäß a), d.h. durch Flüssigkeitsdruck von oben, angewendet.

Mit dem Entfernen der Harzschicht (7) aus Behälter (1) und dem nachfolgenden Mischen der in Behälter (1) verbliebenen Ionenaustauscher durch Einblasen von Luft ist der Regenerations-Schritt beendet und es beginnt der Beladungsschritt (Schritt C).

Schritt C (Beladungsschritt): Die zu behandelnde Flüssigkeit tritt durch Leitung (2) in den Behälter (1) ein, durchströmt das in Schritt B aufgebaute Mischbett von oben nach unten und verläßt als aufbereitete Flüssigkeit über Leitung (3) Behälter (1).

Schritt D (Rückführung der in Schritt B aus dem Bereich der Mitteldrainage (8) entfernten Harzschicht (7)): Nach Abschluß des Beladungsschrittes (Schritt C) wird Ventil (11) geöffnet, das im Vorratsgefäß (10) befindliche Harz durch Steigrohr (9) in Behälter (1) zurückgeführt und dort zusammen mit der erschöpften Ionenaustauschermasse des Mischbettes der Auftrennung und Regeneration (Schritt E) unterworfen.

Die Rückführung der im Vorratsgefäß (10) befindlichen Harzmasse kann auch während der Auftrennung (Klassierung) der erschöpften Ionenaustauschermasse des Mischbettes erfolgen.

Schritt E (Auftrennung und Regeneration der im Beladungsschritt (Schritt C) erschöpften Harzmasse und der aus dem Vorratsgefäß (10) zurückgeführten Harzmasse):

Die erschöpfte Harzmasse des Mischbettes und die aus dem Vorratsgefäß (10) zurückgeführte Harzmasse werden durch Rückspülen im aufwärts gerichteten Flüssigkeitsstrom, d.h. durch Einleiten von Flüssigkeit durch Leitung (3) in Kationenaustauscher (5) und Anionenaustauscher (6) aufgetrennt (klassiert). Anschließend wird jede der beiden wieder in getrennten Schichten vorliegenden Komponenten für sich wie in Schritt (A) beschrieben, regeneriert. Die Regeneration wird wiederum mit Schritt B (Überführen der Harzschicht (7) in das Vorratsgefäß (10)) beendet.

Die erfindungsgemäß aus dem Filter zu entfernende Harzschicht (7) soll im wesentlichen den gesamten fehlbeladenen Kationen- und Anionenaustauscher enthalten. Die zur Erreichung dieses Zwecks erforderliche Dicke (D) der die Mitteldrainage (8) symmetrisch umgebenden Harzschicht (7) wird empirisch bestimmt. Aus der erforderlichen Dicke (D) ergibt sich der Abstand (d), den das untere Ende des Steigrohrs (9) von der Mitteldrainage (8) aufweisen muß. Dieser Abstand (d) beträgt D/2. Je nach dem, ob mit Druck von oben oder von unten gefördert wird, befindet sich das in die Ionenaustauschermasse eintauchende Ende des Steigrohrs (9) im Abstand (d) gleich D/2 entweder unterhalb oder oberhalb der Mitteldrainage (8). Die gewünschte Dicke (D) der aus dem Bereich der Mitteldrainage (8) zu entfernenden Harzschicht (7) läßt sich besonders einfach einstellen, wenn die Steigrohre (9) in ihrer Länge verstellbar sind.

Das Vorratsgefäß (10) ist vorteilhaft nach oben durch eine für Flüssigkeiten durchlässige aber für Ionenaustauscher undurchlässige Vorrichtung abgeschlossen. Diese Vorrichtung ermöglicht ein kontinuierliches Abziehen der Flüssigkeit aus dem Vorratsgefäß, ohne daß Ionenaustauscher mit ausgetragen wird.

Das Verschwinden der Harzschicht (7) bei der Überführung in das Vorratsgefäß (10) läßt sich z. B. am Absinken der Oberkante des Anionenaustauschers (6) im Schauglas (14) (s. Fig. 2) oder an dem in das Vorratsgefäß (10) geförderten Harzvolumen verfolgen. Das Verfolgen des im Vorratsgefäß (10) geförderten Harzvolumens läßt sich besonders einfach gestalten, wenn man das Vorratsgefäß (10) als Meßgefäß ausbildet. Aus dem geförderten Harzvolumen ergibt sich unmittelbar die Menge, d.h. auch die Dicke (D) der geförderten Harzschicht (1).

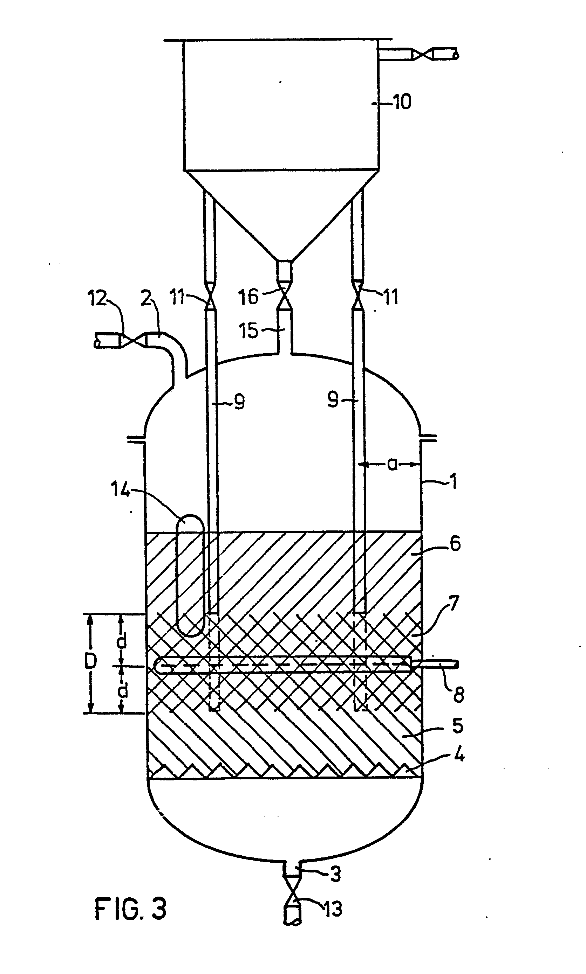

Die Rückführung der in das Vorratsgefäß (10) geförderten Harzschicht (7) kann durch Steigleitung (9) erfolgen. Sie kann aber auch über eine getrennte Rückführleitung (15) (s. Fig. 3) vorgenommen werden.

Eine weitere vorteilhafte Ausführungsform des erfindungsgemäßen Mischbettfilters kann darin bestehen, die unteren Enden der zum erfindungsgemäßen Entfernen der Harzschicht (7) bestimmten Steigrohre (9) trichterförmig aufzuweiten. Mit Hilfe dieses trichterförmig erweiterten Steigrohres (9) bzw. trichterförmig erweiterten Steigrohre (9) läßt sich die Harzschicht (7) besonders gleichmäßig abziehen. Der Querschnitt der trichterförmigen Erweiterung des Steigrohres beträgt vorteilhaft das 2- bis 10-fache, vorzugsweise das 4- bis 6-fache des Querschnittes des Steigrohrs.

Außer den bereits genannten Vorteilen, höhere nutzbare Kapazität und verbesserte Qualität der behandelten Flüssigkeit, bietet das erfindungsgemäße Verfahren folgende Vorteile:

Beim Arbeiten nach dem erfindungsgemäßen Verfahren bleibt die volle Volumenkapazität der Mischbettfüllungen erhalten und wird die Differenz des spezifischen Gewichtes von Kationen- und Anionenaustauscher voll ausgenutzt. Mit Hilfe des erfindungsgemäßen Verfahrens wird fernerhin eine wesentlich verbesserte Ausnutzung der Regeneriermittel und damit eine wesentliche Herabsetzung des Regeneriermittelverbrauchs erreicht. Diese verbesserte Ausnutzung wird zum einen dadurch bewirkt, daß bei dem erfindungsgemäßen Verfahren die Schichthöhen der beiden Komponenten für eine effiziente Regeneration stets groß genug sind. Zum anderen wird die verbesserte Regeneriermittelausnutzung dadurch bewirkt, daß die aus dem Filter entfernte Ionenaustauschermasse weitgehend in regenerierter Form vorliegt. Da der Kationenaustauscher in der H-Form spezifisch leichter ist als in der mit Metallkationen beladenen Form, bildet dieser regenerierte Kationenaustauscher nach der Auftrennung die oberste, vom Regeneriermittel zuletzt durchflossene, der erschöpfte Kationenaustauscher dagegen die untere, vom Regeneriermittel zuerst durchflossene Lage der Kationenaustauscherschicht. Diese Schichtung des Kationenaustauschers während der Regeneration führt zu einer besonders vollständigen Regenerierung des beladenen Kationenaustauschers und zu einer besonders guten Ausnutzung des Regeneriermittels.

In dem erfindungsgemäßen Verfahren können das Regeneriermittel für den Kationenaustauscher und das Regeneriermittel für den Anionenaustauscher sowohl in gleicher Richtung, z. B. beide von oben nach unten oder von unten nach oben, durch die Schicht des betreffenden Ionenaustauschers geleitet werden als auch in einander entgegengesetzten Richtungen. Die Führung der beiden Regeneriermittel in einander entgegengesetzten Richtungen ist im erfindungsgemäßen Verfahren besonders vorteilhaft. Bei dieser Arbeitsweise wird das Regeneriermittel für den Anionenaustauscher von oben eingespeist und an der Mitteldrainage zusammen mit dem für den Kationenaustauscher von unten eingespeisten Regeneriermittel abgezogen. Da die Regenerierchemikalien beim Durchströmen der beiden Austauscherschichten verbraucht werden, ist ihre Regenerierwirkung nach Durchlauf der Austauscherschichten, d.h. im Bereich der Mitteldrainage, am geringsten. Da erfindungsgemäß eben diese Ionenaustauschermasse im Bereich der Mitteldrainage entfernt wird, wird verhindert, daß ungenügend regenerierter Austauscher am Beladungsschritt teilnimmt. Dies führt zur Erhöhung der Gesamtkapazität des Mischbettfilters und zur Verringerung des Schlupfes an Ionen während der Entsalzung, d.h. zu einer Erhöhung der Qualität der behandelten Flüssigkeit.

Diese vorteilhafte Ausführungsform des erfindungsgemäßen Verfahrens ist von besonderer Bedeutung zur Herabsetzung des Verdrängungsschlupfes, wenn das Mischbett nicht nur in der H/OH-Form betrieben wird sondern, wie dies bei der Reinigung von ammoniakalischen Kondensaten üblich ist, auch in der $NH_4$/OH-Form. Der im Kondensat enthaltene Ammoniak bewirkt eine Verdrängung der im Mischbett nach der Regeneration etwa noch verbliebenen Kationen und Anionen, vor allem der $Na^+$-, $Cl^-$- und $SO_4^{--}$-Ionen.

Je weniger dieser Ionen nach der Regeneration auf den beiden Komponenten verblieben sind, desto geringer ist auch der Verdrängungsschlupf. ·

Ein weiterer Vorteil des erfindungsgemäßen Verfahrens ist, daß nicht nur der Regeneriermittelverbrauch herabgesetzt wird, sondern auch die zum Auswaschen der überschüssigen Regeneriermittel benötigte Wassermenge verringert wird, da das Auswaschen der Ionenaustauschermasse im Bereich der Mitteldrainage verkürzt werden kann; diese Ionenaustauschermasse wird beim hydraulischen Entfernen ohnehin gespült und nimmt darüber hinaus am Beladungsschritt nicht teil.


**Beispiel 1**

Es wird ein gemäß Fig. 1 gebautes Mischbettfilter verwendet. Der Behälter (1) hat einen Durchmesser von 800 mm, sein freier innerer Querschnitt beträgt 0,5 m² und seine zylindrische Höhe, gemessen vom unteren Düsenboden (4), beträgt 4000 mm. Die Mitteldrainage (8) ist in einem Abstand von 1000 mm vom unteren Düsenboden (4) angebracht. Behälter (1) ist mit 5 gleichmäßig über den Behälterquerschnitt verteilten, von oben in die Ionenaustauschermasse eintauchenden, in ihrer Eintauchtiefe verstellbaren Steigrohren (9) (innerer Durchmesser: 15 mm) ausgerüstet.

Die Filtersäule (1) ist mit 500 l stark saurem Kationenaustauscher in der Na-Form (spezifisches Gewicht: 1,24) und 500 l stark basischem Anionenaustauscher in der Cl-Form (spezifisches Gewicht: 1,08) gefüllt.

Zum Beladen des regenerierten Mischbettes wird ein entsalztes Wasser mit einem Gehalt von

1     ppm Na-Ionen
1,5   ppm Cl-Ionen
0,04  ppm $SiO_2$

und einer Leitfähigkeit von 5μ S/cm verwendet.

Zur Regeneration werden 120 g HCl (100 %ig) in Form 6 %iger wäßriger HCl/l Kationenaustauscher und 120 g NaOH (100 %ig) in Form 4 %iger wäßriger NaOH/l Anionenaustauscher jeweils von oben nach unten durch den betreffenden Ionenaustauscher geleitet. Die aus dem Anionenaustauscher ablaufende Natronlauge wird an der Drainage (8), die aus dem Kationenaustauscher ablaufende wäßrige Salzsäure, bei Ventil (13) abgezogen.

Anschließend an das Regenerieren wird jeder Ionenaustauscher so lange ausgewaschen, bis die Leitfähigkeit des abfließenden Waschwassers nur noch 10μ S/cm beträgt. (Erforderliche Waschwassermenge insgesamt 8500 l).

Anschließend wird aus dem Bereich der Mitteldrainage (8) eine Harzschicht definierter, in Tabelle 1 angegebener Dicke D (1/2 D oberhalb und 1/2 D unterhalb der Mitteldrainage) hydraulisch durch Rohr (9) in das als Meßgefäß ausgebildete Vorratsgefäß (10) gefördert. Die Fördergeschwindigkeit in den Steigrohren (9) beträgt: 1 m/sec.

Die im Filter verbleibenden Kationen- und Anionenaustauscher werden durch Einblasen von Preßluft in bekannter Weise gemischt. Das Mischbett wird mit dem oben beschriebenen entsalzten Wasser mit einer Geschwindigkeit von 40 m³/h (Fließrichtung: von oben nach unten) beladen. Nach 1/2-stündiger Betriebszeit werden in dem aus dem Mischbett ablaufenden Wasser die in diesem verbliebenen Restmengen an Natrium- und Chloridionen und seine Leitfähigkeit bestimmt. Die gefundenen Restwerte (in ppb) und Leitfähigkeiten (in μ S/cm) sind ebenfalls in Tabelle 1 angegeben. Zur Bestimmung der Kapazität des Mischbetts wird die Wassermenge gemessen, die insgesamt durch das Mischbett geleitet werden kann, bis die Leitfähigkeit im ablaufenden Wasser auf 0,5μ S/cm angestiegen ist. Diese Wassermengen (in Bettvolumina Mischbett) sind

7

ebenfalls in Tabelle 1 angegeben.

**Tabelle 1**

| D* [mm] | Restwerte Na [ppb] | Cl [ppb] | Leitfähigkeit [μ S/cm] | Gesamtdurchsatz [BV-MB]** |
|---|---|---|---|---|
| 0 | 5 | 6 | 0,15 | 4100 |
| 100 | 4 | 7 | 0,10 | 4400 |
| 200 | 0,8 | 1 | 0,06 | 4900 |
| 300 | 0,5 | 0,6 | 0,054 | 5100 |
| 400 | 0,5 | 0,5 | 0,056 | 5150 |

* D = Dicke der aus dem Bereich der Mitteldrainage entfernten Harzschicht

** BV-MB = Bettvolumina Mischbett

Nach Erschöpfung des Mischbetts wird die im Vorratsgefäß (10) aufbewahrte Ionenaustauschermasse über Leitung (9) in den Behälter (1) zurückgeführt. Die vereinigte Ionenaustauschermasse wird durch einen durch Leitung (3) eintretenden Flüssigkeitsstrom in Kationen- und Anionenaustauscher aufgetrennt und erneut mit den angegebenen Mengen an Salzsäure und Natronlauge regeneriert.

**Beispiel 2**

Es wird wie in Beispiel 1 beschrieben gearbeitet; abweichend von Beispiel 1 werden die Ionenaustauscher jedoch nur mit 60 g HCl (100 %ig)/1 Kationenaustauscher und 60 g NaOH(100 %ig)/1 Anionenaustauscher regeneriert.

Die nach der Regeneration mit der geringeren Menge an Regeneriermittel erhaltenen Ergebnisse sind in Tabelle 2 zusammengefaßt.

**Tabelle 2**

| D [mm] | Restwerte Na [ppb] | Cl [ppb] | Leitfähigkeit [μ S/cm] | Gesamtdurchsatz [BV-MB] |
|---|---|---|---|---|
| 0 | 22 | 25 | 0,21 | 2900 |
| 100 | 20 | 25 | 0,18 | 3050 |
| 200 | 1,5 | 2 | 0,09 | 3280 |
| 300 | 0,5 | 0,7 | 0,06 | 4220 |
| 400 | 0,5 | 0,7 | 0,058 | 4700 |

**Beispiel 3**

Es wird wie in Beispiel 2 angegeben gearbeitet, mit dem einzigen Unterschied, daß die Säurelösung von unten durch den Kationenaustauscher und die Natronlauge von oben durch den Anionenaustauscher geleitet und beide ablaufenden Regeneriermittel gemeinsam durch die Mitteldrainage (8) abgeleitet werden. Das Auswaschen der Regeneriermittel erfolgt in gleicher Richtung wie die Regenerierung, und zwar in Versuch (a) bis zu einem Leitfähigkeitswert im Ablauf der Mitteldrainage (8) von 30 μ S/cm (erforderliche Waschwassermenge: 8000 l) und in Versuch (b) bis zu einem Leitfähigkeitswert im Ablauf der Mitteldrainage (8) von 150 μ S/cm (erforderliche Waschwassermenge: 3000 l).

**Tabelle 3a**

| D [mm] | Restwerte Na [ppb] | Cl [ppb] | Leitfähigkeit [μ S/cm] | Gesamtdurchsatz [BV - MB] |
|---|---|---|---|---|
| 0 | 15 | 19 | 0,20 | 3500 |
| 100 | 11 | 15 | 0,15 | 3150 |
| 200 | 1,2 | 1,5 | 0,01 | 4020 |
| 300 | 0,4 | 0,7 | 0,058 | 4300 |
| 400 | 0,4 | 0,6 | 0,056 | 4900 |

**Tabelle 3b**

| D [mm] | Restwerte Na [ppb] | Cl [ppb] | Leitfähigkeit [$\mu$ S/cm] | Gesamtdurchsatz [BV - MB] |
|---|---|---|---|---|
| 0 | 25 | 35 | 0,29 | 2200 |
| 100 | 22 | 32 | 0,26 | 2500 |
| 200 | 10 | 15 | 0,20 | 2900 |
| 300 | 1,5 | 2 | 0,08 | 4000 |
| 400 | 0,8 | 1 | 0,06 | 4550 |

## Beispiel 4

Es wird wie in Beispiel 1 beschrieben gearbeitet; nur wird anstelle des in Beispiel 1 verwendeten entsalzten Wassers ein vollentsalztes Wasser mit einem Gehalt von
0,8 mg $NH_3$/1 und 0,015 mg Na-Ionen/l
und einem pH-Wert von 9,3 verwendet.

Bei diesem Entsalzungsversuch wird die Natriumkonzentration in dem aus dem Mischbettfilter ablaufenden Wasser bestimmt. Die Abgabe der Natrium-Ionen aus dem Mischbettfilter ist eine Folge der Umwandlung des Kationenaustauschers in die Ammoniumform durch das Beladungswasser. Der auftretende Natriumschlupf, d.h. die durch den Ammoniak verdrängte Menge Natrium, ist ein Maß für den Fehlbeladungs- und Regenerierungsgrad des Kationenaustauschers.

Die im Ablauf festgestellten Natriumkonzentrationen (in ppb) sind in Tabelle 4 angegeben.

**Tabelle 4**

| D [mm] | Restwert im Zeitpunkt des $NH_3$-Durchbruchs Na [ppb] |
|---|---|
| 0 | 35 |
| 100 | 25 |
| 200 | 10 |
| 300 | 3 |
| 400 | 1 |

Aus den Daten in Tabelle 4 geht hervor, daß bei hinreichender Dicke D der aus dem Bereich der Mitteldrainage entfernten Ionenaustauscherschicht (7) praktisch kein Ionenschlupf mehr auftritt.

## Beispiel 5

Es wird wie in Beispiel 1 beschrieben gearbeitet, nur wird die Harzschicht (7) definierter Dicke D aus dem Bereich der Mitteldrainage (8) nicht durch Druck von oben auf die Ionenaustauschermasse sondern durch Druck von unten in das Vorratsgefäß (10) ausgetragen. Das zum Fördern dienende Wasser tritt diesmal durch Rohr (3) ein. Die Enden der Steigrohre (9) befinden sich in der oberen Begrenzungsfläche der aus dem Filter zu entfernenden Harzschicht (7). Die Fördergeschwindigkeit in den Steigrohren (9) beträgt 2,5 m/sec.

Die Änderung der Richtung des Förderwasser-Zulaufs führt zu keiner Änderung der Eigenschaften des Mischbettes beim Beladungsvorgang. Es werden vielmehr für die einzelnen Schichtdicken D die gleichen Restwerte, Leitfähigkeitswerte und Gesamtdurchsätze erzielt, wie sie in Beispiel 1 in Tabelle 1 angegeben sind.

## Beispiel 6

Es wird wie in Beispiel 1 beschrieben gearbeitet mit dem einzigen Unterschied, daß die Steigrohre (9) nicht von oben, sondern wie in Fig. 2 dargestellt, von unten in die Ionenaustauschermasse eingeführt werden und die aus dem Bereich der Mitteldrainage (8) zu entfernende Harzschicht (7) definierter Dicke D in ein unterhalb des Behälters (1) befindliches Vorratsgefäß (10) gefördert wird und zwar in der Versuchsreihe a) durch Wasserdruck von oben und in der Versuchsreihe b) durch Wasserdruck von unten. In der Versuchsreihe a) befanden sich die in die Ionenaustauschermasse eintauchenden Enden der Steigrohre (9) in der unteren Begrenzungsfläche der aus dem Behälter (1) zu fördernden Harzschicht (7); die Fördergeschwindigkeit in den Steigrohren (9) betrug 1 m/sec. In der Versuchsreihe b) befanden sich die in die Ionenaustauschermasse eintauchenden Enden der Steigrohre (9) in der oberen Begrenzungsfläche der aus dem Behälter (1) zu fördernden Harzschicht (7). Die Fördergeschwindigkeit in den Steigrohren (9) betrug 2,5 m/sec.

Die Änderung der Richtung, in der die aus dem Bereich der Mitteldrainage (8) entfernte Harzschicht (7) aus dem Behälter (1) gefördert wurde, hatte keinerlei Änderung der Eigenschaften des Mischbettes beim Beladungsvorgang zur Folge. Es wurden vielmehr für die einzelnen Schichtdicken D die gleichen Restwerte, Leitfähigkeitswerte und Gesamtdurchsätze erzielt, wie sie in Beispiel 1 in Tabelle 1 angegeben sind.

## Patentansprüche

1. Verfahren zur internen Regeneration von Mischbettfiltern durch Auftrennen der erschöpften Ionenaustauschermasse des Mischbettes in Kationen- und Anionenaustauscher mittels aufströmender Flüssigkeit, Regenerieren und Auswaschen der beiden Komponenten, Entfernen der im Bereich der Grenzfläche Kationenaustauscher/Anionenaustauscher befindlichen Austauscherschicht, Mischen des im Filter verbliebenen Kationenaustauschers mit dem im Filter verbliebenen Anionenaustauscher für den neuen Beladungsvorgang und - nach Beendigung des Beladungsvorganges Zugabe der aus dem Filter entfernten Austauschermasse zur erschöpften Ionenaustauschermasse vor oder während der Auftrennung in Kationen- und Anionenaustauscher und Beginnen des nächsten Arbeitszyklus mit der Regeneration von Kationen- und Anionenaustauschern, dadurch gekennzeichnet, daß man die Entnahme der im Bereich der Grenzfläche Kationenaustauscher/Anionenaustauscher befindlichen Austauscherschicht verwirbelungsfrei mittels eines oder mehrerer senkrecht in die geschichtete Ionenaustauschermasse eingeführten Steigrohres (eingeführter Steigrohre) vornimmt, dessen (deren) in die Ionenaustauschermasse eintauchende(n) Öffnung(en) sich, je nachdem, ob die zur hydraulischen Förderung dienende Flüssigkeit dem Filter von oben oder von unten zugeführt wird, in der unteren oder in der oberen Grenzfläche der aus dem Filter zu fördernden Harzschicht befindet (befinden) und das (die) gleichmäßig so im Querschnitt des Filters angeordnet ist (sind), dan der Abstand (die Abstände) Steigrohr (Rohrmitte)/Filterwand den Wert 400 mm nicht überschreitet (überschreiten) und - bei mehreren Steigrohren - die gegebenenfalls unterschiedlichen Abstände der einzelnen Steigrohre voneinander den Wert 800 mm nicht überschreiten und das Verhältnis von Abstand (a) Steigrohr (Rohrmitte)/Filterwand zur Dicke D der aus dem Filter zu entfernenden Harzschicht höchstens 4 : 1 beträgt.

2. Verfahren nach Anspruch 1, dadurch gekennzeichnet, daß die Dicke der zu entfernenden Harzschicht (D) im Filter 100 bis 500 mm (je 50 bis 250 mm über und unter der Mitteldrainage) beträgt.

3. Verfahren gemäß Anspruch 1, dadurch gekennzeichnet, daß die Dicke der zu entfernenden Harzschicht im Filter 200 bis 400 mm (je 100 bis 200 mm über und unter der Mitteldrainage) beträgt.

4. Mischbettfilter mit interner Regeneration zur Durchführung des Verfahrens gemäß Anspruch 1, 2 oder 3, bestehend aus einer für Mischbettfilter mit interner Regeneration üblichen Filterapparatur, dadurch gekennzeichnet, daß diese Filterapparatur zum selektiven, verwirbelungsfreien Entfernen der im Bereich der Grenzfläche Kationenaustauscher/Anionenaustauscher befindlichen Ionenaustauscherschicht mit einer Vorrichtung ausgerüstet ist, die aus einem oder mehreren senkrecht in die Ionenaustauschermasse eingeführten, mit einem Vorratsgefäß verbundenen Steigrohr(en) besteht, dessen (deren) in die Ionenaustauschermasse eintauchende(n) Öffnung(en) sich, je nachdem, ob die zur hydraulischen Förderung dienende Flüssigkeit dem Filter von oben oder von unten zugeführt wird, in der unteren oder in der oberen Grenzfläche der aus dem Filter zu fördernden Harzschicht befindet (befinden) und das (die) gleichmäßig so im Querschnitt des Filters angeordnet ist (sind), daß der Abstand (die Abstände) Steigrohr (Rohrmitte)/Filterwand den Wert 400 mm nicht überschreitet (überschreiten) und - bei mehreren Steigrohren - die gegebenenfalls unterschiedlichen Abstände der einzelnen Steigrohre voneinander den Wert 800 mm nicht überschreiten und das Verhältnis von Abstand (a) Steigrohr (Rohrmitte)/Filterwand zur Dicke D der aus den Filter zu entfernenden Harzschicht höchstens 4 : 1 beträgt.

5. Mischbettfilter gemäß Anspruch 4, dadurch gekennzeichnet, daß es aus einem mit verschließbaren Flüssigkeitszu- und -ableitungen (2) und (3) versehenen Behälter (1) besteht, dessen zylindrischer Teil nach unten durch eine Flüssigkeits-durchlässige Vorrichtung (4) abgeschlossen ist, auf der die aus Kationenaustauscher (5) und Anionenaustauscher (6) bestehende Ionenaustauschermasse ruht, in dem sich in Höhe der theoretischen Grenzfläche Kationenaustauscher/Anionenaustauscher eine Mitteldrainage (8) befindet und der mit einem (oder mehreren) senkrecht in die Ionenaustauschermasse eingeführten, mit einem Vorratsgefäß (10) verbundenen Steigrohr(en) (9) versehen ist, dessen (bzw. deren) in die Ionenaustauschermasse eintauchende(n) Öffnung(en) sich, je nachdem, ob die zur hydraulischen Förderung dienende Flüssigkeit von oben oder von unten zugeführt wird, in der unteren oder in der oberen Grenzfläche der aus Behälter (1) selektiv zu fördernden Harzschicht (7) befindet (befinden) und in dem das (bzw. die) Steigrohr(e) (9) gleichmäßig so im Querschnitt des Behälters (1) angeordnet ist (sind), daß der Abstand (bzw. die Abstände) Steigrohr (Rohrmitte)/Behälterwand den Wert 400 mm nicht überschreitet (überschreiten) und - bei mehreren Steigrohren (9) - die gegebenenfalls unterschiedlichen Abstände der einzelnen Steigrohre voneinander den Wert 800 mm nicht überschreiten und das Verhältnis von Abstand (a) Steigrohr (Rohrmitte)/Filterwand zur Dicke D der aus den Filter zu entfernenden Harzschicht höchstens 4 : 1 beträgt.

6. Mischbettfilter gemäß Anspruch 4 oder 5, dadurch gekennzeichnet, daß der Abstand Steigrohr (Rohrmitte)/Filterwand 150 bis 300 mm und - bei mehreren Steigrohren - die gegebenenfalls unterschiedlichen Abstände Steigrohr (Rohrmitte)/Steigrohr (Rohrmitte) 300 bis 600 mm betragen.

**0 125 463**

7. Mischbettfilter gemäß Anspruch 4 bis 6, dadurch gekennzeichnet, daß der innere Durchmesser der Steigrohre 10 bis 50 mm deträgt.

**Claims**

1. Process for the internal regeneration of mixed bed fillers by separating the exhausted ion exchanger mass of the mixed bed into cation exchanger and anion exchanger by means of upward- flowing liquid, regenerating and washing out the two components, removing the exchanger layer located in the region of the boundary surface between the cation exchanger and the anion exchanger, mixing the cation exchanger remaining in the filter with the anion exchanger remaining in the filter for the new loading step and - after the loading step is complete - adding the exchanger mass removed from the filter to the exhausted ion exchanger mass before or during the separation into cation exchanger and anion exchanger and beginning the next working cycle with the regeneration of the cation and anion exchangers, characterised in that the removal of the exchanger layer located in the region of the boundary surface between the cation exchanger and the anion exchanger is carried out without any whirling by means of one or more ascending tube(s) inserted vertically into the layered ion exchanger mass whose opening(s) dipping into the ion exchanger mass is (are) positioned, depending on whether the liquid used for the hydraulic conveying is introduced into the filter from the top or from the bottom, either in the lower or in the upper boundary surface of the resin layer to be conveyed out of the filter and which tube(s) is (are) arranged uniformly in the cross-section of the filter such that the distance(s) between the ascending tube(s) (centre of the tube) and the filter wall does (do) not exceed the value of 400 mm and - in the case of more than one ascending tube - the optionally different distances between the individual ascending tubes do not exceed the value of 800 mm and the ratio of the distance (a) between the ascending tube (centre of the tube) and the filter wall to the thickness D of the resin layer to be removed from the filter is at most 4: 1.

2. Process according to Claim 1, characterised in that, in the filter, the thickness of the resin layer (D) to be removed is 100 to 500 mm (50 to 250 mm above and 50 to 250 mm below the central drainage).

3. Process according to Claim 1, characterised in that, in the filter, the thickness of the resin layer to be removed is 200 to 400 mm (100 to 200 mm above and 100 to 200 mm below the central drainage).

4. Mixed bed filter with internal regeneration for carrying out the process according to Claim 1, 2 or 3, consisting of a filter apparatus which is customary for mixed bed filters with internal regeneration, characterised in that, for the selective, non-whirling removal of the ion exchanger layer located in the region of the boundary surface between the cation exchanger and the anion exchanger, this filter apparatus is equipped with a device which consists of one or more ascending tube(s) inserted vertically into the ion exchanger mass and connected to a storage vessel, the opening(s) of which tube(s) dipping into the ion exchanger mass is (are) positioned, depending on whether the liquid used for the hydraulic conveying is introduced into the filter from the top or from the bottom, either in the lower or in the upper boundary surface of the resin layer to be conveyed out of the filter and which tube(s) is (are) arranged uniformly in the cross-section of the filter such that the distance(s) between the ascending tube(s) (centre of the tube) and the filter wall does (do) not exceed the value of 400 mm and - in the case of more than one ascending tube - the optionally different distances between the individual ascending tubes do not exceed the value of 800 mm and the ratio of the distance (a) between the ascending tube (centre of the tube) and the filter wall to the thickness D of the resin layer to be removed from the filter is at most 4: 1.

5. Mixed bed filter according to Claim 4, characterised in that it consists of a container (1) provided with closable liquid feed and outflow lines (2) and (3), the cylindrical part of which container is terminated at the bottom by a liquid-permeable device (4) on which the ion exchanger mass consisting of cation exchanger (5) and anion exchanger (6) rests, in which container a central drainage (8) is located at the level of the theoretical boundary surface between the cation exchanger and the anion exchanger and which container is provided with one (or more) ascending tube (9) inserted vertically into the ion exchanger mass and connected to a supply vessel (10) the opening(s) of which tube(s) dipping into the ion exchanger mass is (are) positioned, depending on whether the liquid used for the hydraulic conveying is introduced from the top or from the bottom, either in the lower or in the upper boundary surface, of the resin layer (7) to be conveyed selectively out of the container (1) and in which container the ascending tube(s) (9) is (are)arranged uniformly in the cross-section of the container (1) such that the distance(s) between the ascending tube(s) (centre of the tube) and the container wall does (do) not exceed the value of 400 mm and - in the case of more than one ascending tube (9) - the optionally different distances between the individual ascending tubes do not exceed the value of 800 mm and the ratio of the distance (a) between the ascending tube (centre of the tube) and the filter wall to the thickness D of the resin layer to be removed from the filter is at most 4: 1.

6. Mixed bed filter according to Claim 4 or 5, characterised in that the distance between the ascending tube (centre of the tube) and the filter wall is 150 to 300 mm and - in the case of more than one ascending tube - the optionally different distances between ascending tube (centre of the tube) and ascending tube (centre of the tube are 300 to 600 mm.

7. Mixed bed filter according to Claim 4 to 6, characterised in that the internal diameter of the ascending tubes is 10 to 50 mm.

11

## Revendications

1. Procédé de régénération interne de filtres à lit mixte par séparation de la masse épuisée d'échangeur ionique du lit mixte en échangeur cationique et échangeur anionique au moyen d'un liquide en courant ascendant, régénération et lavage par épuisement des deux composants, enlèvement de la couche d'échangeur se trouvant dans la région de l'interface échangeur cationique/échangeur anionique, mélange de l'échangeur cationique restant dans le filtre avec l'échangeur anionique restant dans le filtre pour le nouveau processus de charge et - une fois le processus de charge terminé - addition de la masse d'échanqeur retirée du filtre à la masse d'échangeur ionique épuisé avant ou pendant la séparation en échanqeur cationique et échangeur anionique et amorçage du cycle de travail suivant avec la régénération d'échangeurs cationiques et d'échangeurs anioniques, caractérisé en ce qu'on effectue l'enlèvement de la couche d'échangeur se trouvant dans la région de l'interface entre échangeur cationique et échangeur anionique sans turbulence au moyen d'un ou plusieurs tubes ascendants introduits verticalement dans la masse stratifiée d'échangeur ionique dont l'ouverture ou les ouvertures plongeant dans la masse d'échangeur ionique se trouvent, selon que le liquide servant au transport hydraulique est amené au filtre par le haut ou par le bas, dans l'aire de délimitation inférieure ou supérieure de la couche de résine devant être transportée depuis le filtre et qui est ou qui sont disposées uniformément dans la section transversale du filtre de manière que la distance du tube ascendant (milieu du tube) à la paroi du filtre ne dépasse pas 400 mm dans chaque cas et - dans le cas de plusieurs tubes ascendants - les distances éventuellement différentes entre les divers tubes ascendants ne dépassent pas 800 mm et le rapport de la distance (a) tube ascendant (milieu du tube)/paroi du filtre à l'épaisseur D de la couche de résine à retirer du filtre s'élève au maximum à 4: 1.

2. Procédé suivant la revendication 1, caractérisé en ce que l'épaisseur de la couche de résine (D) à enlever dans le filtre s'élève à 100 - 500 mm (50 à 250 mm au-dessus ainsi qu'au-dessous du drainage médian).

3. Procédé suivant la revendication 1, caractérisé en ce que l'épaisseur de la couche de résine à enlever dans le filtre s'élève à 200 - 400 mm (100 à 200 mm au-dessus ainsi qu'au-dessous du drainage médian).

4. Filtre à lit mixte avec régénération interne pour la mise en oeuvre du procédé suivant la revendication 1, 2 ou 3, constitué d'un appareil filtrant classique pour filtre à lit mixte avec régénération interne, caractérisé en ce que cet appareil filtrant est équipé en vue de l'enlèvement sélectif sans turbulence de la couche d'échangeur d'ions se trouvant dans la région de l'interface échanqeur cationique/ échangeur anionique, d'un dispositif qui est constitué d'un ou plusieurs tubes ascendants plongeant verticalement dans la masse d'échangeurs ioniques, en liaison avec un réservoir, dont l'ouverture ou les ouvertures plongeant dans la masse d'échangeurs anioniques se trouvent, selon que le liquide servant au transport hydraulique est amené au filtre par le haut ou par le bas, dans l'aire de délimitation inférieure ou dans l'aire de délimitation supérieure de la couche de résine devant être retirée du filtre et qui est ou qui sont disposees uniformément dans la section transversale du filtre de manière que la distance tube ascendant (milieu du tube)/paroi du filtre ne dépasse pas 400 mm et que - dans le cas de plusieurs tubes ascendants - les distances éventuellement différentes entre les tubes ascendants individuels ne dépassent pas 800 mm, et le rapport de la distance (a) tube ascendant (milieu du tube)/paroi du filtre à l'épaisseur D de la couche de résine à enlever du filtre s'élève au maximum à 4: 1.

5. Filtre à lit mixte suivant la revendication 4, caractérisé en ce qu'il est constitué d'un récipient (1) présentant des conduits d'admission (2) et de départ (3) de liquide pouvant être obturés, dont la partie cylindrique est fermée vers le bas par un dispositif (4) laissant passer le liquide, sur lequel repose la masse d'échangeurs ioniques formée de l'échangeur cationique (5) et de l'échangeur anionique (6), dans lequel un drainage médian (8) se trouve à la hauteur de l'interface théorigue entre échangeur cationique et échanqeur anionique et qui est pourvu d'un ou plusieurs tubes ascendants (9) plongeant verticalement dans la masse d'échanqeurs ioniques, en liaison avec un réservoir (10) dont l'ouverture ou les ouvertures plongeant dans la masse d'échangeurs ioniques se trouvent, selon que le liquide servant au transport hydraulique est amené par le haut ou par le bas, dans l'aire de délimitation inférieure ou l'aire de délimitation supérieure de la couche de résine (7) à enlever du réservoir (1) et dans lequel le ou les tubes ascendants (9) sont disposés uniformement dans la section transversale du récipient (1) de manière que la distance tube ascendant (milieu du tube)/paroi du récipient ne dépasse pas la valeur de 400 mm et que - dans le cas de plusieurs tubes ascendants (9) - les distances éventuellement différentes entre les tubes ascendants individuels ne dépassent pas la valeur de 800 mm et le rapport de la distance (a) tube ascendant (milieu du tube)/paroi du filtre à l'épaisseur D de la couche de résine à retirer du filtre s'élève au maximum à 4: 1.

6. Filtre à lit mixte suivant la revendication 4 ou 5, caractérisé en ce que la distance tube ascendant (milieu du tube)/paroi du filtre s'élève à 150 - 300 mm et - dans le cas de plusieurs tubes ascendants - les distances éventuellement différentes tube ascendant (milieu du tube)/ tube ascendant (milieu du tube) s'élèvent à 300 - 600 mm.

7. Filtre à lit mixte suivant les revendications 4 à 6, caractérisé en ce que le diamètre intérieur des tubes ascendants s'élève à 10 - 50 mm.

FIG. 1

FIG. 2

FIG. 3